# EUROPÄISCHE PATENTSCHRIFT

(11) **EP 3 437 779 B1**
(45) Veröffentlichungstag und Bekanntmachung des Hinweises auf die Patenterteilung: **18.05.2022**
(21) Anmeldenummer: 17184074.7
(22) Anmeldetag: 31.07.2017
(51) Int. Cl.: B23K 9/10

(54) **SCHWEISSSTROMQUELLE UND SYSTEM MIT EINER LÜFTEREINHEIT**
ARC WELDING SOURCE AND SYSTEM WITH THE VENTILATOR
SOURCE DE COURANT DE SOUDURE ET SYSTÈME COMPRENANT UNE UNITÉ DE VENTILATEUR

(43) Veröffentlichungstag der Anmeldung: 06.02.2019
(73) Patentinhaber: EWM AG, 56271 Mündersbach (DE)
(72) Erfinder: SZCZESNY, Jan, 56271 Mündersbach (DE)
(74) Vertreter: Cohausz & Florack

(56) Entgegenhaltungen:
- US-A1- 2006 274 499
- US-A1- 2011 220 627

## Beschreibung

Die Erfindung betrifft eine Schweißstromquelle mit einem Gehäuse, das einen Gehäuseinnenraum umgibt, und mit einer Lüftereinheit umfassend mindestens einen oder mehrere elektrisch betriebene Lüfter zur Belüftung des Gehäuseinnenraums. Weiterhin betrifft die Erfindung ein System zur Bereitstellung einer solchen Schweißstromquelle mit einem Gehäuse einer Schweißstromquelle, das einen Gehäuseinnenraum umgibt, und mit einer Lüftereinheit umfassend mindestens einen oder mehrere elektrisch betriebene Lüfter zur Belüftung des Gehäuseinnenraums.

Schweißstromquellen werden zum Lichtbogenschweißen, insbesondere zum Metallschutzgasschweißen (MSG-Schweißen) oder zum Wolfram-Inertgasschweißen (WIG-Schweißen), verwendet. Um die für das Schweißen erforderlichen hohen Ströme bereitstellen zu können, sind derartige Schweißstromquellen mit Leistungselektronik, insbesondere Gleichrichtern und Invertern, ausgestattet, die zusammen mit den weiteren zum Betrieb der Schweißstromquelle erforderlichen Komponenten in einem Gehäuse untergebracht ist.

Die hohe Leistungsaufnahme und -abgabe von Schweißstromquellen ist mit einer erheblichen Verlustleistung verbunden, die in der Schweißstromquelle als Abwärme anfällt. Diese Abwärme muss aus dem Gehäuse der Schweißstromquelle abgeführt werden, damit es im Gehäuseinnenraum nicht zu einem unkontrollierten Temperaturanstieg kommt, der ein Versagen der Leistungselektronik zur Folge hätte. Zu diesem Zweck weisen Schweißstromquellen aus dem Stand der Technik Kühlkreisläufe auf, die Abwärme von der Leistungselektronik abführen, sowie Lüftereinheiten, mit denen der Gehäuseinnenraum belüftet und Abwärme aus dem Gehäuse herausgeführt wird.

Die Lüftereinheit stellt eine der typischerweise wenigen Komponenten mit beweglichen Teilen innerhalb der Schweißstromquelle dar, so dass diese Komponenten einem erhöhten Wartungsaufwand unterliegen.

Die Wartung bzw. der Austausch von Lüftereinheiten hat sich in der Vergangenheit jedoch als aufwändig dargestellt, insbesondere wenn die Lüftereinheit durch eine zu öffnende Gehäuseseite nicht direkt zugänglich ist, sondern durch andere Komponenten verdeckt wird, die dann zunächst ausgebaut werden müssen, um an die Lüftereinheit zu gelangen. Besonders aufwändig ist dies bei modernen Kompaktgeräten, bei denen der Gehäuseinnenraum zur Erzielung eines möglichst kompakten Geräts soweit ausgenutzt wird, dass wenig Freiraum zur Wartung oder zum Austausch der Lüftereinheit verbleibt und regelmäßig mehrere Komponenten ausgebaut werden müssen, um an die Lüftereinheit zu gelangen.

In der US 2011/220627 A1 wird eine Schweißstromquelle mit einer Lüftereinheit beschrieben, wobei die Komponenten der Lüftereinheit auf einem Schienensystem angebracht sind. In der US 2006/274499 A1 (Basis für den Oberbegriff der Ansprüche 1 und 11) wird weiter ein Schweißgerät mit einem Lüfter beschrieben, der in eine unter einer abnehmbaren Frontabdeckung des Schweißgeräts angeordneten Gehäuseöffnung eingesetzt werden kann.

Vor diesem Hintergrund liegt der vorliegenden Erfindung die Aufgabe zugrunde, eine Schweißstromquelle und ein System zur Verfügung zu stellen, die eine einfachere Wartung der Lüftereinheit erlauben.

Eine Schweißstromquelle gemäß der Erfindung ist im Anspruch 1 definiert.

Weiterhin ist ein System zur Bereitstellung einer solchen Schweißstromquelle gemäß der Erfindung im Anspruch 11 definiert.

Mit der zuvor beschriebenen Schweißstromquelle und dem zuvor beschriebenen System wird erreicht, dass die Lüftereinheit der Schweißstromquelle von außen zugänglich ist, so dass es nicht erforderlich ist, zunächst mehrere Komponenten ausbauen zu müssen, um die Lüftereinheit zu warten oder einen Lüfter auszutauschen.

Die Schweißstromquelle weist ein Gehäuse auf, das einen Gehäuseinnenraum umgibt. Im Gehäuse der Schweißstromquelle sind insbesondere diejenigen Komponenten angeordnet, die zum Betrieb der Schweißstromquelle erforderlich sind, beispielsweise ein Gleichrichter, ein Inverter und eine Steuereinrichtung zur Steuerung der Schweißstromquelle. In das Gehäuse können weiterhin Ein- und Ausgabeelemente wie Knöpfe, Drehregler, LEDs oder ein Bildschirm integriert sein. Weiterhin können in das Gehäuse Anschlüsse, insbesondere für den Schweißstrom, für einen Drahtvorschubkoffer oder für externe Steuergeräte integriert sein.

Im Gehäuse ist eine von außen zugängliche Aufnahme für die Lüftereinheit vorgesehen. Vorzugsweise ist die Aufnahme auf der Rückseite der Schweißstromquelle angeordnet. Die Aufnahme umfasst insbesondere eine an die Größe der Lüftereinheit angepasste Öffnung im Gehäuse, so dass die Lüftereinheit von außen durch die Öffnung in die Aufnahme eingesetzt werden kann.

Weiterhin kann die Lüftereinheit von außen lösbar in der Aufnahme befestigt werden. Zu diesem Zweck können an der Aufnahme, insbesondere im Bereich um die Öffnung der Aufnahme, Befestigungsmittel wie zum Beispiel Gewindebohrungen für Schraubverbindungen oder Haken für Klemmverbindungen vorgesehen sein, mit denen die Lüftereinheit, ggf. unter Verwendung weiterer Befestigungselemente in der Aufnahme befestigt werden kann. Beispielsweise kann die Lüftereinheit dadurch in der Aufnahme befestigt werden, dass die Öffnung der Aufnahme nach Einsetzen der Lüftereinheit durch ein lösbar mit dem Gehäuse verbundenes Bauteil zumindest teilweise verschlossen wird.

Die Lüftereinheit ist derart von außen in die Aufnahme eingesetzt und von außen lösbar in der Aufnahme befestigt, dass die Befestigung der Lüftereinheit in der Aufnahme von außen gelöst und die Lüftereinheit von außen aus der Aufnahme entnommen werden kann. Unter dem Begriff "von außen" wird die Zugänglichkeit von außerhalb des Gehäuses verstanden, insbesondere ohne das Gehäuse öffnen zu müssen.

Auf diese Weise ist die Lüftereinheit zu Wartungs- oder Austauschzwecken von außen zugänglich, so dass darauf verzichtet werden kann, erst andere Komponenten im Gehäuse der Schweißstromquelle ausbauen zu müssen, um die Lüftereinheit zu entnehmen.

Zwar kann es weiterhin erforderlich sein, das Gehäuse der Schweißstromquelle zum Lösen oder Verbinden einer elektrischen Verbindung für die Stromversorgung der Lüftereinheit zu öffnen. Entsprechend weist das Gehäuse vorzugsweise eine zu öffnende Seitenwand auf, durch die der Gehäuseinnenraum von außen zugänglich ist.

Derartige Anschlussarbeiten erfordern jedoch weniger Arbeitsraum im Gehäuse als der Ein- und Ausbau der Lüftereinheit über den Gehäuseinnenraum, so dass auf den Ausbau anderer Komponenten gleichwohl verzichtet werden kann.

Im Folgenden werden verschiedene Ausführungsformen der Schweißstromquelle und des Systems beschrieben, wobei die einzelnen Ausführungsformen jeweils unabhängig voneinander für die Schweißstromquelle und das System gelten und die einzelnen Ausführungsformen zudem auch untereinander kombiniert werden können.

Bei einer ersten Ausführungsform ist ein die Aufnahme von außen abdeckendes Lüftungsgitter, insbesondere Kiemengitter, vorgesehen, das von außen lösbar am Gehäuse befestigt ist und die Lüftereinheit in der Aufnahme hält. Bei einer entsprechenden Ausführungsform des Systems umfasst dieses ein Lüftungsgitter, das von außen lösbar derart am Gehäuse befestigt werden kann, dass es die Lüftereinheit in der Aufnahme hält. Das Lüftungsgitter kann beispielsweise durch eine Schraubverbindung am Gehäuse befestigt werden. Vorzugsweise sind zu diesem Zweck am Lüftungsgitter und am Gehäuse im Bereich der Aufnahme zueinander korrespondierende Bohrungen vorgesehen. Alternativ können am Lüftungsgitter und am Gehäuse auch zueinander korrespondierende Elemente einer Klemmverbindung vorgesehen sein.

Weist das Gehäuse der Schweißstromquelle ein zu öffnendes Seitenblech auf, das über Schrauben mit dem übrigen Gehäuse verbunden ist, so ist das Lüftungsgitter vorzugsweise ebenfalls über Schrauben mit dem Gehäuse verbindbar bzw. verbunden, wobei für das Seitenblech und das Lüftungsgitter vorzugsweise die gleichen Schraubentypen verwendet werden. Auf diese Weise kann dasselbe Werkzeug, beispielsweise derselbe Schraubendreher, sowohl zum Lösen des Lüftungsgitters und des Seitenblechs verwendet werden.

Die Lüftereinheit umfasst erfindungsgemäß einen Rahmen, in dem der eine oder die mehreren Lüfter angeordnet sind, wobei der Rahmen an die Aufnahme im Gehäuse angepasst ist. Die Verwendung eines Rahmens erleichtert die Handhabung der einzelnen Lüfter, da zum Beispiel mehrere in den Rahmen integrierte Lüfter gleichzeitig in die Aufnahme eingesetzt werden können. Vorzugsweise weist der Rahmen für jeden elektrischen Lüfter eine eigene Lüfteraufnahme auf, was insbesondere die Montage und Befestigung des Lüfters im Rahmen erleichtert.

Darüber hinaus kann ein solcher Rahmen auch als Adapter für verschiedene Lüftertypen dienen, so dass in dasselbe Gehäuse verschieden große Lüfter eingebaut werden können, indem ein entsprechender Rahmen verwendet wird. Der Rahmen dient in diesem Fall als Größenadapter zwischen Lüfter und Aufnahme.

Weiter besteht der Rahmen erfindungsgemäß aus einem geschäumten Material, beispielsweise aus einem geschäumten Kunststoff. Auf diese Weise können der bzw. die Lüfter über den Rahmen vom Gehäuse entkoppelt werden, so dass Vibrationen vom Lüfter auf das Gehäuse nicht oder nur in geringerem Maße übertragen werden.

Bei einer weiteren Ausführungsform wird der Rahmen kraftschlüssig in der Aufnahme gehalten. Beispielsweise können zu diesem Zweck Rasten oder Vorsprünge am Gehäuse und/oder am Rahmen vorgesehen sein. Auf diese Weise wird das Einsetzen einer Lüftereinheit in die Aufnahme erleichtert, da diese dort zunächst kraftschlüssig fixiert werden kann, so dass sich beispielsweise ein Lüftungsgitter einfacher am Gehäuse anschrauben lässt.

Bei einer weiteren Ausführungsform weist der Rahmen eine Markierung auf, die die Einsatzrichtung der Lüfter in den Rahmen anzeigt. Vorzugsweise weisen der Rahmen und der eine oder die mehreren Lüfter zueinander korrespondierende Markierungen auf, die die Einsatzrichtung der Lüfter in den Rahmen anzeigen. Beispielsweise können am Rahmen und ggf. an dem Lüfter bzw. den Lüftern Pfeile vorgesehen sein, die die Luftströmrichtung oder die Drehrichtung der einzelnen Lüfter anzeigen. Auf diese Weise wird der Einbau der Lüfter in den Rahmen vereinfacht, so dass die Lüfter insbesondere nicht falsch herum in den Rahmen eingebaut werden.

Bei einer weiteren Ausführungsform weist der Rahmen eine Lüfteraufnahme für einen Lüfter auf, in der der Lüfter angeordnet ist, wobei die Lüfteraufnahme eine Anschlagsfläche zur Positionierung des Lüfters in der Lüfteraufnahme aufweist. Auf diese Weise kann der Lüfter in die Lüfteraufnahme des Rahmens eingesetzt und bis zur Anschlagfläche geschoben werden. Dadurch vereinfacht sich die korrekte Positionierung des Lüfters im Rahmen und damit auch in der Aufnahme zur Belüftung des Gehäuseinnenraums.

Vorzugsweise weist die Lüfteraufnahme weiterhin Vorsprünge zur formschlüssigen Fixierung des Lüfters in der Lüfteraufnahme auf. Durch die Vorsprünge zur formschlüssigen Fixierung wird verhindert, dass der Lüfter nach dem Einsetzen wieder aus der korrekten Position herausrutscht.

Bei einer weiteren Ausführungsform ist zur Stromversorgung der Lüftereinheit ein erster Teil einer elektrischen Steckverbindung an der Lüftereinheit vorgesehen und ein korrespondierender zweiter Teil der elektrischen Steckverbindung ist mit Befestigungsmitteln derart im Gehäuseinnenraum positioniert, dass der erste und der zweite Teil der Steckverbindung zur Herstellung einer elektrischen Verbindung ineinander gesteckt werden können, wenn die Lüftereinheit in der Aufnahme angeordnet ist. Beispielsweise kann an der Lüftereinheit ein Kabel mit einem Stecker und im Gehäuseinnenraum ein Kabel mit einer entsprechenden Buchse vorgesehen sein, die zur Herstellung einer elektrischen Verbindung ineinander gesteckt werden können.

Indem der zweite Teil der elektrischen Steckverbindung mit Befestigungsmitteln derart im Gehäuseinnenraum, insbesondere auf der Innenseite des Gehäuses positioniert ist, dass der erste und der zweite Teil der Steckverbindung einander gesteckt werden können, sind die beiden Teile der Steckverbindung nach dem Einsetzen der Lüftereinheit in die Aufnahme gleich richtig positioniert, um eine elektrische Verbindung herstellen zu können.

Bei bekannten Schweißstromquellen aus dem Stand der Technik sind zwar ebenfalls Kabel für die Stromversorgung der Lüftereinheit vorgesehen. Diese sind jedoch nicht an einem bestimmten Ort positioniert, sondern verlaufen lose im Gehäuseinnenraum, so dass ein Techniker zum Anschluss der Lüftereinheit das Kabel zunächst im Gehäuseinnenraum lokalisieren und ggf. andere Komponenten ausbauen muss, um an das Kabel zu gelangen.

Bei einer weiteren Ausführungsform sind, wenn die Lüftereinheit in der Aufnahme angeordnet ist, der erste und der zweite Teil der Steckverbindung in einem durch eine zu öffnende Seitenwand des Gehäuses zugänglichen Bereich im Gehäuseinnenraum angeordnet. Auf diese Weise kann ein Techniker nach dem Einsetzen der Lüftereinheit in die Aufnahme den Anschluss der Lüftereinheit einfach durch die zu öffnende Seitenwand vornehmen, ohne andere Komponenten aus dem Gehäuseinnenraum ausbauen zu müssen.

Vorzugsweise weisen der Rahmen und die Aufnahme zueinander korrespondierende Durchführungen für ein oder mehrere Lüfterkabel zur Stromversorgung des oder der Lüfter auf. Auf diese Weise können Lüfterkabel von dem einen oder den mehreren Lüftern im Rahmen durch die Durchführungen des Rahmens und der Aufnahme in den Gehäuseinnenraum zu dem korrespondierenden Gegenstück der Steckverbindung geführt werden. Insbesondere können an einem Blechteil des Gehäuses Fixiermittel im Gehäuseinnenraum vorgesehen sein, um den zweiten Teil der Steckverbindung einer elektrischen Verbindung im Bereich der Aufnahme, insbesondere im Bereich der Durchführungen an der Aufnahme zu fixieren.

Bei einer weiteren Ausführungsform ist ein Kühlkörper für die Lüftereinheit vorgesehen und derart im Gehäuseinnenraum angeordnet und befestigt, dass er die Aufnahme nach innen begrenzt. Durch den Kühlkörper wird eine effektivere Kühlung des Gehäuseinnenraums bzw. ein verbesserter Abtransport der Wärme aus dem Gehäuseinnenraum erreicht. Gleichzeitig bildet der Kühlkörper durch seine Positionierung den Grund der Aufnahme, so dass die Lüftereinheit bis zu einer vorgegebenen Tiefe in die Aufnahme hineingeschoben werden kann. Auf diese Weise kann auf gesonderte Gehäuseteile verzichtet werden, die den Grund der Aufnahme bilden, so dass sich insbesondere das Gehäuse günstiger produzieren und zusammenbauen lässt.

Bei einer weiteren Ausführungsform ist ein Blechabschnitt des Gehäuses an der Aufnahme derart nach innen gebogen, dass der Blechabschnitt ein Seitenteil der Aufnahme bildet. Auf diese Weise wird eine Führung bereitgestellt, mit deren Hilfe die die Lüftereinheit, insbesondere der Rahmen, gerade und ohne zu verkanten in die Aufnahme eingesetzt werden kann. Dies erleichtert das Einsetzen der Lüftereinheit in die Aufnahme. Vorzugsweise sind in dem nach innen gebogenen Blechabschnitt eine oder mehrere Durchführungen vorgesehen, um ein Lüfterkabel von der Lüftereinheit in den Gehäuseinnenraum zu führen.

Bei einer weiteren Ausführungsform ist eine im Gehäuseinnenraum angeordnete Komponente derart angeordnet, dass eine Seitenfläche der Komponente ein Seitenteil der Aufnahme bildet. Beispielsweise kann die Invertereinheit im Bereich der Aufnahme derart angeordnet sein, dass eine Seite der Invertereinheit eine Seitenfläche der Aufnahme bildet. Auf diese Weise kann auf das Vorsehen separater Seitenflächen für die Aufnahme verzichtet werden, so dass sich insbesondere das Gehäuse günstiger produzieren und zusammenbauen lässt.

Weitere Vorteile und Merkmale der Schweißstromquelle und des Systems ergeben sich aus der nachfolgenden Beschreibung von Ausführungsbeispielen, wobei auf die beigefügte Zeichnung Bezug genommen wird.

In der Zeichnung zeigen:
- Fig. 1a-b: ein Ausführungsbeispiel der Schweißstromquelle und des Systems,
- Fig. 2a-c: den Rahmen der Lüftereinheit für die Schweißstromquelle aus Fig. 1a und
- Fig. 3a-b: die Schweißstromquelle aus Fig. 1a mit entfernter Seitenabdeckung.

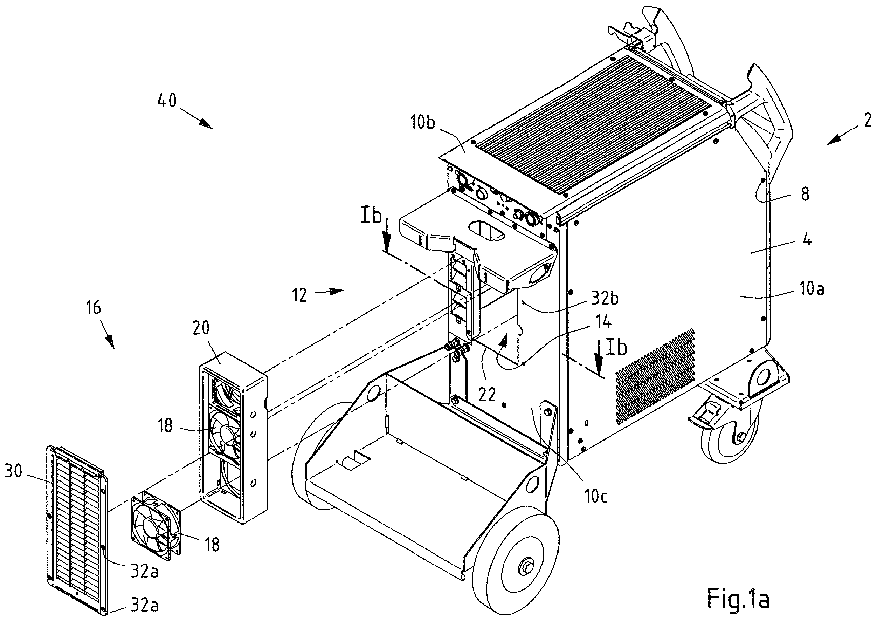

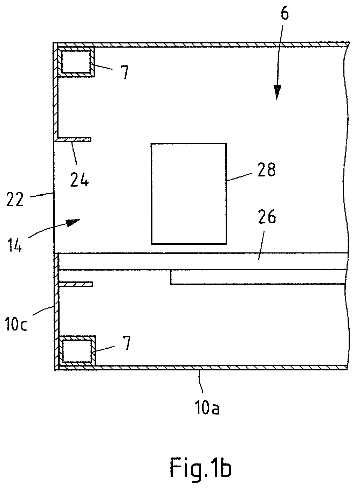

Figur 1a zeigt ein Ausführungsbeispiel einer Schweißstromquelle 2 in perspektivischer Teilexplosions-Darstellung von schräg hinten. Fig. 1b zeigt einen schematischen ausschnittweisen Querschnitt durch die Schweißstromquelle 2 entsprechend der in Fig. 1a mit "Ib" bezeichneten Schnittebene.

Die Schweißstromquelle 2 weist ein Gehäuse 4 auf, das einen Gehäuseinnenraum 6 umgibt, in dem die Komponenten zum Betrieb der Schweißstromquelle 2 untergebracht sind, insbesondere ein Gleichtrichter, ein Inverter, ein Steuergerät zur Steuerung der Schweißstromquelle und optional ein Kühlwassermodul.

Das Gehäuse 4 umfasst ein Gerüst aus miteinander verbundenen Profilen 7, an dem über Schraubverbindungen 8 Gehäusebleche 10a-c lösbar befestigt sind, die die einzelnen Flächen des Gehäuses 4 bilden und die im Gehäuseinnenraum 6 angeordneten Komponenten vor Verschmutzung und Feuchtigkeit schützen.

Auf der Rückseite 12 der Schweißstromquelle ist im Gehäuse 4 eine von außen zugängliche Aufnahme 14 für eine Lüftereinheit 16 vorgesehen, in die die Lüftereinheit 16 von außen einsetzbar ist.

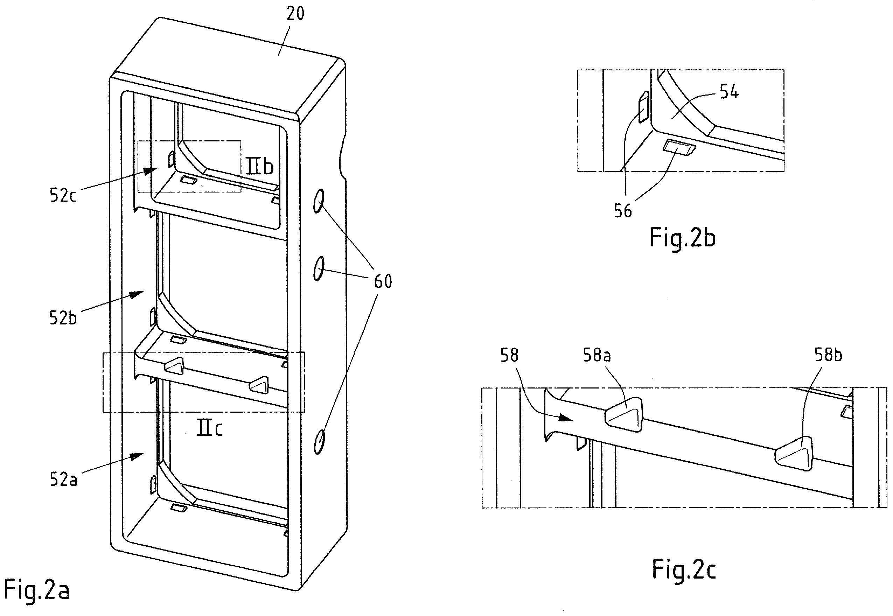

Die Lüftereinheit 16 umfasst mehrere Lüfter 18, die in einen Rahmen 20 eingesetzt sind. Der Aufbau des Rahmens 20 wird weiter unten in Verbindung mit den Figuren 2a-c erläutert.

Für die Aufnahme 14 ist in dem Gehäuseblech 10c auf der Rückseite 12 eine Öffnung 22 vorgesehen, deren Größe an die Größe des Rahmens 20 angepasst ist, so dass sich der Rahmen 20 bündig in die Aufnahme 14 einsetzen lässt. Das Gehäuseblech 10c weist am Rand der Öffnung 22 eine nach innen umgebogene Seitenkante 24 auf, die den Rahmen beim Einsetzen in die Aufnahme 14 führt. Auf der der Seitenkante 24 gegenüberliegenden Seite der Aufnahme 14 ist im Gehäuseinnenraum 6 die Rückseite der Invertereinheit 26 positioniert, durch die der Rahmen 20 beim Einführen in die Aufnahme 14 ebenfalls seitlich geführt wird. Weiterhin ist innerhalb des Gehäuseinnenraums 6 ein Kühlkörper 28 in Form von Kühlrippen vorgesehen, die parallel zur Öffnung 22 um die Tiefe des Rahmens 20 in den Gehäuseinnenraum 6 hinein versetzt positioniert sind und den Grund der Aufnahme 14 bilden. Die Einschubtiefe des Rahmens 20 in den Gehäuseinnenraum 6 wird auf diese Weise durch den Kühlkörper 28 beschränkt, so dass der Rahmen 20 einfacher in der richtigen Position in der Aufnahme 14 angeordnet werden kann.

Weiterhin ist ein Lüftungsgitter 30 vorgesehen, das die Öffnung 22 abdeckt und über korrespondierende Bohrungen 32a-b im Lüftungsgitter 30 und dem Gehäuse 4 mit dem Gehäuse 4 verschraubt werden kann, so dass das Lüftungsgitter 30 die Lüftereinheit 16 in der Aufnahme 14 hält. Die Schweißstromquelle 2 mit der Lüftereinheit 16 und dem Lüftungsgitter 30 bilden zusammen ein System 40.

Figur 2a zeigt den Rahmen 20 der Lüftereinheit 16 des Systems 40 aus Figur 1a. Der Rahmen 20 weist drei voneinander getrennte Lüfteraufnahmen 52a-c auf, deren Größen an die Dimensionen der einzusetzenden Lüfter 18 angepasst sind. Figur 2a zeigt Lüfteraufnahmen 52a-c mit verschiedenen Größen, um Lüfter verschiedener Bauarten einsetzen zu können.

Die Figuren 2b und 2c zeigen die in Figur 2a mit "IIb" bzw. "IIc" gekennzeichneten Bereiche in vergrößerter Darstellung. Wie aus Figur 2b ersichtlich, weisen die Lüfteraufnahmen 52a-c jeweils Anschlagsflächen 54 und Vorsprünge 56 zur Positionierung der Lüfter 18 in den Lüfteraufnahmen 52a-c auf. Die Anschlagsflächen 54 erlauben eine genaue Positionierung der Lüfter 18 in der jeweiligen Aufnahme, indem die Lüfter 18 jeweils bis zu der jeweiligen Anschlagsfläche 54 in die betreffende Lüfteraufnahme 52a-c eingesetzt werden. Die Vorsprünge 56 dienen zur Befestigung der Lüfter 18 in der Aufnahme 14, so dass die Lüfter 18 in der korrekten Position im Rahmen 20 gehalten werden.

An dem Rahmen 20 sind Markierungen 58 vorgesehen, die die richtige Positionierung der Lüfter 18 im Rahmen 20 anzeigen. In Figur 2c sind die Markierungen 58 exemplarisch als zwei in das Material des Rahmens 20 eingelassene Pfeile 58a-b ausgebildet, die die Luftrichtung anzeigen. Die Lüfter 18 können entsprechende Markierungen aufweisen, um das richtige Einsetzen der Lüfter weiter zu erleichtern.

An der Seite weist der Rahmen 20 Durchführungen 60 zur Durchführung eines Stromversorgungskabels der Lüfter 18 durch den Rahmen 20 auf.

Der Rahmen 20 ist aus einem geschäumten Kunststoffmaterial gebildet, so dass die in den Rahmen 20 eingebauten Lüfter 18 vom Gehäuse 4 entkoppelt sind und sich Vibrationen der Lüfter 18 nicht oder nur in geringem Maße auf das Gehäuse 4 übertragen.

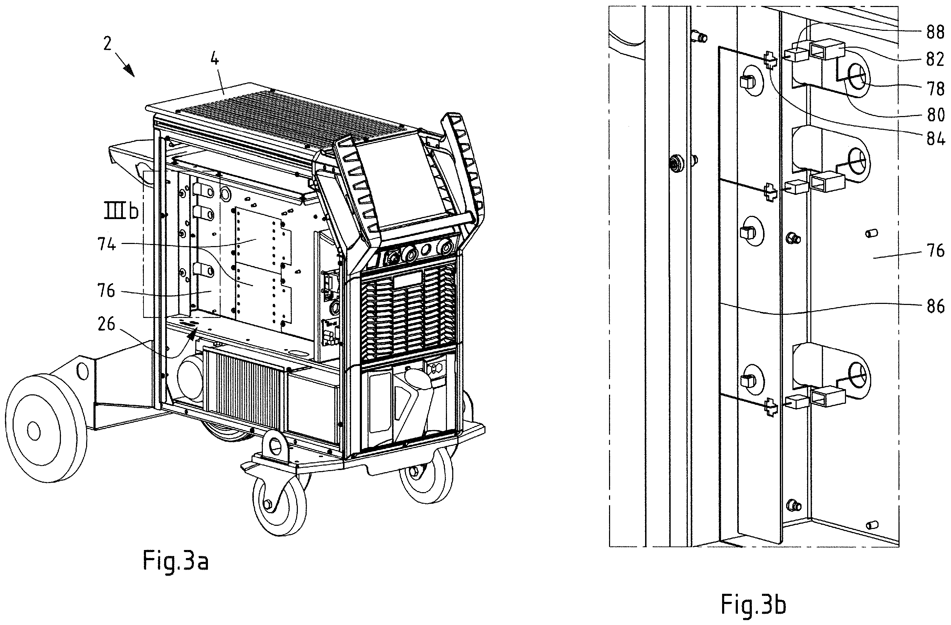

Figur 3a zeigt die Schweißstromquelle 2 in perspektivischer Darstellung von schräg vorne, wobei das Seitenblech 10a durch Lösen der Schrauben 8 entfernt wurde und dadurch der Gehäuseinnenraum 6 zugänglich ist. Figur 3b zeigt eine vergrößerte Darstellung des in Figur 3a mit "IIIb" bezeichneten Bereichs.

Im Gehäuseinnenraum 6 ist die Invertereinheit 26 zu sehen mit zwei Inverterplatinen 74 sowie einem Positionierungsblech 76, auf dem die Inverterplatinen 74 angeordnet sind. Das Positionierungsblech 76 ist neben der Aufnahme 14 derart am Gehäuse 4 der Schweißstromquelle 2 verschraubt, dass das Blech 76 ein Seitenteil der Aufnahme 14 bildet. Im Blech 76 sind zu den Durchführungen 60 korrespondierende Durchführungen 78 vorgesehen, so dass von den Lüftern 18 jeweils ein Stromversorgungskabel 80 mit einem ersten Teil 82 einer Steckverbindung durch die Durchführungen 60 und die Durchführungen 78 in den Gehäuseinnenraum 6 geführt werden kann.

Weiterhin sind im Gehäuseinnenraum 6 im Bereich der Durchführungen 78 Befestigungsmittel 84 vorgesehen, an denen ein Stromversorgungskabel 86 mit einem zweiten Teil 88 der Steckverbindung fixiert ist, so dass die Lüfter 18 durch Verbinden jeweils eines ersten Teils 82 und eines zweiten Teils 88 der Steckverbindung an die elektrische Stromversorgung angeschlossen werden können.

Durch die Fixierung der Kabel 86 mit dem zweiten Teil 88 der Steckverbinder im Bereich der Aufnahme 14 bzw. der Durchführungen 60 sind die Kabel und Steckverbindungsteile jeweils derart angeordnet, dass ein Techniker den Anschluss der Lüfter 18 ohne weiteres durchführen kann, ohne zunächst das Kabel 86 im Gehäuseinnenraum 6 auffinden zu müssen.

Die Durchführungen 78 und die Befestigungsmittel 84 sind insbesondere in einem Bereich angeordnet, der durch Öffnen des Seitenblechs 10a zugänglich ist. Auf diese Weise kann der Techniker die elektrische Verbindung des Lüfters mit der Stromversorgung vornehmen, indem er das Seitenblech 10a öffnet. Insbesondere befinden sich zwischen dem Seitenblech 10a und dem Bereich der Durchführungen 78 und der Befestigungsmittel 84 keine weiteren Komponenten, so dass es nicht erforderlich ist, Komponenten auszubauen, um die elektrische Verbindung der Lüfter 18 herzustellen.

Mit der zuvor beschriebenen Schweißstromquelle 2 und dem zuvor beschriebenen System 40 wird die Wartung und der Austausch eines Lüfters 18 erleichtert, da die Lüftereinheit einfach von außen zugänglich und ein Ausbau von anderen Komponenten im Gehäuseinnenraum 6 nicht erforderlich ist. Durch die Positionierung der jeweiligen Durchführungen 78 und Befestigungsmittel 84 an einer durch Öffnen bzw. Entfernen des Seitenblechs 10a zugänglichen Stelle im Gehäuseinnenraum 6 ist auch der elektrische Anschluss der Lüfter 18 zur Stromversorgung einfach möglich, ohne dass erst andere Komponenten ausgebaut oder Kabel im Gehäuseinnenraum 6 aufgefunden werden müssen.

## Patentansprüche

1. Schweißstromquelle (2)
- mit einem Gehäuse (4), das einen Gehäuseinnenraum (6) umgibt, und
- mit einer Lüftereinheit (16) umfassend mindestens einen oder mehrere elektrisch betriebene Lüfter (18) zur Belüftung des Gehäuseinnenraums (6),
- wobei im Gehäuse (4) eine von außen zugängliche Aufnahme (14) für die Lüftereinheit (16) vorgesehen ist, wobei die Lüftereinheit (16) derart von außen in die Aufnahme (14) eingesetzt und lösbar in der Aufnahme (14) befestigt ist, dass die Befestigung der Lüftereinheit (16) in der Aufnahme (14) von außen gelöst und die Lüftereinheit (16) von außen aus der Aufnahme (14) entnommen werden kann,
**dadurch gekennzeichnet,**
- **dass** die Lüftereinheit (16) einen Rahmen (20) umfasst, in dem der eine oder die mehreren Lüfter (18) angeordnet sind, wobei der Rahmen (20) an die Aufnahme (14) im Gehäuse (4) angepasst ist, und
- **dass** der Rahmen (20) aus einem geschäumten Material besteht.

2. Schweißstromquelle nach Anspruch 1,
**dadurch gekennzeichnet, dass** ein die Aufnahme (14) von außen abdeckendes Lüftungsgitter (30) vorgesehen ist, das von außen lösbar am Gehäuse (4) befestigt ist und die Lüftereinheit (16) in der Aufnahme (14) hält.

3. Schweißstromquelle nach Anspruch 1 oder 2,
**dadurch gekennzeichnet, dass** der Rahmen (20) kraftschlüssig in der Aufnahme (14) gehalten wird.

4. Schweißstromquelle nach einem der Ansprüche 1 bis 3,
**dadurch gekennzeichnet, dass** der Rahmen (20) und der eine oder die mehreren Lüfter (18) zueinander korrespondierende Markierungen (58) aufweisen, die die Einsatzrichtung der Lüfter (18) in den Rahmen (20) anzeigen.

5. Schweißstromquelle nach einem der Ansprüche 1 bis 4,
**dadurch gekennzeichnet, dass**
der Rahmen (20) eine Lüfteraufnahme (52a-c) für einen Lüfter (18) aufweist, in der der Lüfter (18) angeordnet ist, wobei die Lüfteraufnahme (52a-c) eine Anschlagsfläche (54) zur Positionierung des Lüfters (18) in der Lüfteraufnahme (52a-c) sowie Vorsprünge (56) zur formschlüssigen Fixierung des Lüfters (18) in der Lüfteraufnahme (52a-c) aufweist.

6. Schweißstromquelle nach einem der Ansprüche 1 bis 5,
**dadurch gekennzeichnet, dass** zur Stromversorgung der Lüftereinheit (16) ein erster Teil (82) einer elektrischen Steckverbindung an der Lüftereinheit (16) vorgesehen ist und dass ein korrespondierender zweiter Teil (88) der elektrischen Steckverbindung mit Befestigungsmitteln (84) derart im Gehäuseinnenraum (4) positioniert ist, dass der erste und der zweite Teil der Steckverbindung zur Herstellung einer elektrischen Verbindung ineinander gesteckt werden können, wenn die Lüftereinheit (16) in der Aufnahme (14) angeordnet ist.

7. Schweißstromquelle nach Anspruch 6,
**dadurch gekennzeichnet, dass**, erste und der zweite Teil (82, 88) der Steckverbindung in einem durch eine zu öffnende Seitenwand (10a) des Gehäuses (4) zugänglichen Bereich im Gehäuseinnenraum (6) angeordnet sind.

8. Schweißstromquelle nach einem der Ansprüche 1 bis 7,
**dadurch gekennzeichnet, dass** ein Kühlkörper (28) für die Lüftereinheit (16) vorgesehen ist, der derart im Gehäuseinnenraum (6) angeordnet und befestigt ist, dass er die Aufnahme (14) nach innen begrenzt.

9. Schweißstromquelle nach einem der Ansprüche 1 bis 8,
**dadurch gekennzeichnet, dass** ein Blechabschnitt (24) des Gehäuse (4) an der Aufnahme (14) derart nach innen gebogen ist, dass der Blechabschnitt (24) ein Seitenteil der Aufnahme (14) bildet.

10. Schweißstromquelle nach einem der Ansprüche 1 bis 9,
**dadurch gekennzeichnet, dass** eine im Gehäuseinnenraum (4) angeordnete Komponente (26) derart angeordnet ist, dass eine Seitenfläche der Komponente (26) ein Seitenteil der Aufnahme (14) bildet.

11. System (40) zur Bereitstellung einer Schweißstromquelle (2) nach einem der Ansprüche 1 bis 10,
- mit einem Gehäuse (4) einer Schweißstromquelle (2), das einen Gehäuseinnenraum (6) umgibt, und
- mit einer Lüftereinheit (16) umfassend mindestens einen oder mehrere elektrisch betriebene Lüfter (18) zur Belüftung des Gehäuseinnenraums (6),
- wobei im Gehäuse (4) eine von außen zugängliche Aufnahme (14) für die Lüftereinheit (16) vorgesehen ist, wobei die Lüftereinheit (16) von außen in die Aufnahme (14) einsetzbar und von außen lösbar an dem Gehäuse (4) befestigbar ist,
**dadurch gekennzeichnet,**
- **dass** die Lüftereinheit (16) einen Rahmen (20) umfasst, in dem der eine oder die mehreren Lüfter (18) angeordnet sind, wobei der Rahmen (20) an die Aufnahme (14) im Gehäuse (4) angepasst ist, und
- **dass** der Rahmen (20) aus einem geschäumten Material besteht.

## Claims

1. Welding power source (2)
- having a housing (4), which surrounds a housing interior (6), and
- having a fan unit (16) comprising at least one or a plurality of electrically operated fans (18) for ventilating the housing interior (6),
- wherein in the housing (4) is provided a receptacle (14) for the fan unit (16) accessible from the outside, wherein the fan unit (16) is inserted into the receptacle (14) from the outside and detachably fastened in the receptacle (14) in such manner that the fastening of the fan unit (16) in the receptacle (14) can be detached from the outside and the fan unit (16) can be removed from the receptacle (14) from the outside,
**characterised**
- **in that** the fan unit (16) comprises a frame (20), in which the one or the plurality of fans (18) are arranged, wherein the frame (20) is adapted to the receptacle (14) in the housing (4), and
- that the frame (20) consists of a foamed material.

2. Welding power source according to claim 1, **characterised in that** a ventilation grille (30) covering the receptacle (14) from the outside is provided, which ventilation grille (30) is fastened on the housing (4) in a manner detachable from the outside and which ventilation grille (30) holds the fan unit (16) in the receptacle (14).

3. Welding power source according to claim 1 or 2, **characterised in that** the frame (20) is held in the receptacle (14) in a force-fit manner.

4. Welding power source according to any one of claims 1 to 3, **characterised in that** the frame (20) and the one or the plurality of fans (18) have markings (58) corresponding to one another, which display the direction of insert of the fans (18) in the frame (20).

5. Welding power source according to any one of claims 1 to 4, **characterised in that** the frame (20) has a fan receptacle (52a-c) for a fan (18), in which the fan (18) is arranged, wherein the fan receptacle (52a-c) has a stop surface (54) for positioning the fan (18) in the fan receptacle (52a-c) as well as projections (56) for positively fixing the fan (18) in the fan receptacle (52a-c).

6. Welding power source according to any one of claims 1 to 5, **characterised in that**, to supply power to the fan unit (16), a first part (82) of an electric plug connection is provided on the fan unit (16) and **in that** a corresponding second part (88) of the electric plug connection is positioned in the housing interior (4) by means of fastening means (84) in such manner that the first and the second part of the plug connection can be inserted into one another to establish an electrical connection when the fan unit (16) is arranged in the receptacle (14).

7. Welding power source according to claim 6, **characterised in that** the first and the second part (82, 88) of the plug connection are arranged in a region in the housing interior (6) accessible through a side wall (10a) of the housing (4) to be opened.

8. Welding power source according to any one of claims 1 to 7, **characterised in that** a cooling body (28) is provided for the fan unit (16) which is arranged and fastened in the housing interior (6) in such manner that it inwardly delimits the receptacle (14).

9. Welding power source according to any one of claims 1 to 8, **characterised in that** a sheet metal section (24) of the housing (4) on the receptacle (14) is bend inwards in such manner that the sheet metal section (24) forms a side part of the receptacle (14).

10. Welding power source according to any one of claims 1 to 9, **characterised in that** a component (26) arranged in the housing interior (4) is arranged in such manner that a side surface of the component (26) forms a side part of the receptacle (14).

11. System (40) for providing a welding power source (2) according to any one of claims 1 to 10,
- having a housing (4) of a welding power source (2), which surrounds a housing interior (6), and
- having a fan unit (16) comprising at least one or a plurality of electrically operated fans (18) for ventilating the housing interior (6),
- wherein in the housing (4) is provided a receptacle (14) for the fan unit (16) accessible from the outside, wherein the fan unit (16) can be inserted into the receptacle (14) from the outside and can be detachably fastened on the housing (4) from the outside,
**characterised**
- **in that** the fan unit (16) comprises a frame (20), in which the one or the plurality of fans (18) are arranged, wherein the frame (20) is adapted to the receptacle (14) in the housing (4), and
- **in that** the frame (20) consists of a foamed material.

## Revendications

1. Source de courant de soudage (2)
- avec un boîtier (4) qui entoure un espace intérieur de boîtier (6), et
- avec une unité de ventilation (16) comprenant au moins un ou plusieurs ventilateurs (18) alimenté électriquement pour la ventilation de l'espace intérieur de boîtier (6),
- un logement (14) accessible de l'extérieur étant prévu pour l'unité de ventilation (16) dans le boîtier (4),
- l'unité de ventilation (16) étant mise en place de l'extérieur dans le logement (14) et fixée de manière amovible dans le logement (14) de telle sorte que la fixation de l'unité de ventilation (16) dans le logement (14) puisse être détachée depuis l'extérieur et l'unité de ventilation (16) puisse être retirée du logement (14) depuis l'extérieur,
**caractérisée**
- **en ce que** l'unité de ventilation (16) comprend un cadre (20), dans lequel sont disposés le ou les ventilateurs (18), le cadre (20) étant adapté au logement (14) dans le boîtier (4), et
- **en ce que** le cadre (20) est constitué d'un matériau expansé.

2. Source de courant de soudage selon la revendication 1,
**caractérisée en ce qu'**une grille d'aération (30) recouvrant le logement (14) par l'extérieur est prévue, laquelle grille est fixée au boîtier (4) de manière amovible depuis l'extérieur et qui maintient l'unité de ventilation (16) dans le logement (14).

3. Source de courant de soudage selon la revendication 1 ou 2,
**caractérisée en ce que** le cadre (20) est maintenu par liaison de force dans le logement (14).

4. Source de courant de soudage selon l'une des revendications 1 à 3, **caractérisée en ce que** le cadre (20) et le ou les ventilateurs (18) présentent des repères (58) correspondant les uns aux autres, et qui indiquent le sens demise en place des ventilateurs (18) dans le cadre (20).

5. Source de courant de soudage selon l'une quelconque des revendications 1 à 4, **caractérisée en ce que** le cadre (20) présente un logement de ventilateur (52a-c) pour un ventilateur (18), dans lequel est disposé le ventilateur (18), le logement de ventilateur (52a-c) présentant une surface de butée (54) pour le positionnement du ventilateur (18) dans le logement de ventilateur (52a-c) ainsi que des saillies (56) pour la fixation par liaison de forme du ventilateur (18) dans le logement de ventilateur (52a-c).

6. Source de courant de soudage selon l'une des revendications 1 à 5, **caractérisée**
- **en ce que**, pour l'alimentation électrique de l'unité de ventilation (16), une première partie (82) d'une connexion électrique enfichable est prévue au niveau de l'unité de ventilation (16) et
- **en ce qu'**une deuxième partie (88) correspondante de la connexion électrique enfichable est positionnée avec des moyens de fixation (84) dans l'espace intérieur de boîtier (4) de telle sorte que la première et la deuxième partie de la connexion enfichable puissent être enfichées l'une dans l'autre pour établir une connexion électrique lorsque l'unité de ventilation (16) est disposée dans le logement (14).

7. Source de courant de soudage selon la revendication 6,
**caractérisée en ce que** la première et la deuxième partie (82, 88) de la connexion enfichable sont disposées dans une zone de l'espace intérieur de boîtier (6), laquelle zone est accessible par une paroi latérale (10a) du boîtier (4) à ouvrir.

8. Source de courant de soudage selon l'une des revendications 1 à 7,
**caractérisée en ce qu'**un corps de refroidissement (28) pour l'unité de ventilation (16) est prévu, lequel corps de refroidissement est disposé et fixé dans l'espace intérieur de boîtier (6) de telle sorte qu'il délimite le logement (14) vers l'intérieur.

9. Source de courant de soudage selon l'une des revendications 1 à 8,
**caractérisée en ce qu'**une section de tôle (24) du boîtier (4) est pliée vers l'intérieur au niveau du logement (14) de telle sorte que la section de tôle (24) forme une partie latérale du logement (14).

10. Source de courant de soudage selon l'une des revendications 1 à 9,
**caractérisée en ce qu'**un composant (26) est disposé dans l'espace intérieur de boîtier (4) de telle sorte qu'une surface latérale du composant (26) forme une partie latérale du logement (14).

11. Système (40) pour la mise à disposition d'une source de courant de soudage (2) selon l'une des revendications 1 à 10,
- avec un boîtier (4) d'une source de courant de soudage (2), qui entoure un espace intérieur de boîtier (6), et
- avec une unité de ventilation (16) comprenant au moins un ou plusieurs ventilateurs (18) alimentés électriquement pour la ventilation de l'espace intérieur de boîtier (6),
- un logement (14) accessible depuis l'extérieur étant prévu pour l'unité de ventilation (16) dans le boîtier (4), l'unité de ventilation (16) pouvant être mise en place dans le logement (14) depuis l'extérieur et pouvant être fixée de manière amovible au niveau le boîtier (4) depuis l'extérieur,
**caractérisé**
- **en ce que** l'unité de ventilation (16) comprend un cadre (20), dans lequel sont disposés le ou les ventilateurs (18), le cadre (20) étant adapté au logement (14) dans le boîtier (4), et
- **en ce que** le cadre (20) est constitué d'un matériau expansé.
